Europäisches Patentamt

European Patent Office

Office européen des brevets

(11) Veröffentlichungsnummer: **0 087 695**
A1

## (12) EUROPÄISCHE PATENTANMELDUNG

(21) Anmeldenummer: 83101557.3

(22) Anmeldetag: 18.02.83

(51) Int. Cl.³: **C 08 F 6/00**
C 08 J 3/02

(30) Priorität: 25.02.82 DE 3206730

(43) Veröffentlichungstag der Anmeldung:
07.09.83 Patentblatt 83/36

(84) Benannte Vertragsstaaten:
AT BE CH DE FR GB IT LI LU NL SE

(71) Anmelder: Chemische Fabrik Stockhausen GmbH
Bäkerpfad 25
D-4150 Krefeld(DE)

(72) Erfinder: Landscheidt, Alfons, Dr. Dipl.-Chem.
Kölner Strasse 390
D-4150 Krefeld(DE)

(72) Erfinder: Stockhausen, Friedrich, Dr. Dipl.-Chem.
Moerser Strasse 155
D-4150 Krefeld(DE)

(74) Vertreter: Klöpsch, Gerald, Dr.-Ing.
An Gross St. Martin 6
D-5000 Köln 1(DE)

(54) Verfahren zur Herstellung zustands- und wirkungsstabiler nicht-wässriger Dispersionen wasserlöslicher Polymerisate.

(57) Die Erfindung betrifft ein Verfahren zur Herstellung zustands-und wirkungsstabiler nicht-wässriger Dispersionen wasserlöslicher, bevorzugt hochmolekularer Polymerisate, die durch Polymerisation mindestens eines wasserlöslichen $\alpha,\beta$-ethylenisch ungesättigten Monomeren in einer W/O-Emulsion hergestellt und azeotrop bis auf einen Rest-Wassergehalt von weniger als 5 Gew.-%, bezogen auf Polymeres, durch Bestrahlung mit Mikrowellen entwässert worden sind. Die Dispersionen weisen bevorzugt Polymerkonzentrationen zwischen 20 und 65 Gew.-% auf. Die azeotrope Entwässerung erfolgt erfindungsgemäß durch Bestrahlung mit Mikrowellen einer Wellenlänge von bevorzugt 0,1 bis 30 cm.

EP 0 087 695 A1

Croydon Printing Company Ltd.

CHEMISCHE FABRIK STOCKHAUSEN GmbH
Bäkerpfad 25, D-4150 KREFELD

Verfahren zur Herstellung zustands- und wirkungsstabiler
nicht-wässriger Dispersionen wasserlöslicher Polymerisate

Die Erfindung betrifft ein Verfahren zur Herstellung zustands- und wirkungsstabiler nicht-wässriger Dispersionen wasserlöslicher Polymerisate. Bevorzugt weisen die Polymerisate hohe Molekulargewichte von 100 000 bis 50 000 000, insbesondere von 1 000 000 bis 10 000 000 auf, da für zahlreiche Anwendungszwecke, z.B. als Flockungs- oder Papierhilfsmittel die Wirksamkeit des Polymerisats mit steigendem Molekulargewicht zunimmt. Die erfindungsgemäß erhaltenen Dispersionen haben bevorzugt hohe Feststoffgehalte von mehr als 20 Gew.-%.

Polymerhaltige W/O-Emulsionen (W/O = Wasser-in-Öl) aus wasserlöslichen α ,ß-ethylenisch ungesättigten Monomeren können durch Polymerisation in umgekehrter Emulsion hergestellt werden (DE-PS 1 089 173). Hierzu werden mit Hilfe eines W/O-Emulgators wässrige Monomerlösungen in einem inerten Kohlenwasserstoff emulgiert und mit Hilfe geeigneter Katalysatoren polymerisiert. Durch die Verwendung spezieller Emulgatorgemische für die W/O-Emulsion, die aus Abmischungen der üblichen W/O-Emulgatoren mit niedrigem HLB-Wert mit Emulgatoren von höherem HLB-Wert bestehen, wird - wie in der DE-PS 24 32 699 und DE-OS 25 37 586 beschrieben - eine Verbesserung der Stabilität der wasserhaltigen W/O-Emulsion erreicht.

Aus der DE-OS 24 19 764 sind nicht-wässrige Dispersionen hochmolekularer, wasserlöslicher Polymerisate bekannt, die durch Photopolymerisation wasserlöslicher Monomerer in einer W/O-Emulsion und nachfolgender azeotroper Entwässerung erhalten werden. In der DE-OS 24 61 934 wird die Herstellung von Dispersionen mit einem verminderten Wassergehalt beschrieben, die dadurch ohne Koagulation einer weiteren Behandlung, z.B. der Zugabe von Netzmittel, zugänglich sind. Nach den Angaben der US-PS 3 507 840 entstehen bei der azeotropen Entwässerung von acrylsäurehaltigen Emulsionspolymerisaten unter Zusatz von Schwermetallsalzen wasserfreie Dispersionen, die in ihrer Polymeraktivität den Ausgangsverbindungen entsprechen. Die US-PS 4 021 399 sagt aus, daß stabile Dispersionen mit bis zu 60 % Feststoffanteil entstehen, wenn das W/O-Verhältnis in der Emulsion bzw. Dispersion während der azeotropen Destillation konstant gehalten wird. In der DE-OS 29 26103 endlich wird ein Verfahren beschrieben, durch das man nicht-wässrige Dispersionen mit erhöhter Stabilität bei einer niedrigen Viskosität der Dispersion und guter Auflösbarkeit des Polymeren enthält. Dies wird erreicht durch eine innerhalb enger Grenzen einzuhaltenden Zusammensetzung der Dispersion aus Polymerisat, Dispergieröl, Sorbitanfettsäureester und ethoxyliertem Fettalkohol/Säure.

Bei der Durchführung einer azeotropen Entwässerung in W/O-
Emulsionen im technischen Maßstab treten eine Reihe von
Schwierigkeiten auf. Eine Ansatzvergrößerung führt beim
Chargenbetrieb meist zu längeren Destillationszeiten und
damit zu einer größeren Temperaturbelastung der Polymeren.
Dadurch sinkt die Effektivität der Polymeren bei der Anwendung. Auch lässt sich das Auftreten von Polymerablagerungen auf den Verdampferflächen nicht verhindern. Bei
diskontinuierlichem Betrieb muß der Verdampfer deshalb
nach jeder Charge gereinigt werden und bei kontinuierlichen Anlagen, bei der die thermische Belastung des Polymerisats durch kürzere Verweilzeiten geringer ist, erlauben die Standzeiten des Verdampfers kein wirtschaftliches Arbeiten.

Auf praktisch unpolare Polymere kann nach DE-OS 18 01 928
und der zugehörigen Zusatzanmeldung DE-OS 19 63 874 ein
Mikrowellentrocknungsverfahren angewendet werden, das
aber wegen des durch Mikrowellen induzierten chemischen
Abbaus polarer Substanzen keinen gangbaren Weg zur Entwässerung bzw. Trocknung der Dispersion wasserlöslicher
Polymerisate aufzeigt.

Aufgabe der Erfindung ist daher die Bereitstellung von
azeotrop entwässerten W/O-Emulsionen der im Anspruch 1
angegebenen Art, die nicht nur hinsichtlich ihres Zustands
als Dispersion stabil sind, sondern deren Polymeraktivität während der Herstellung und Entwässerung keinen Abfall erleidet, also die Wirkungsstabilität der Polymeren
erhalten bleibt. Außerdem soll das Auftreten von Polymerablagerungen auf den Verdampferflächen verhindert werden.

4                        0087695

Gelöst wird diese Aufgabe dadurch, daß die W/O-Emulsion, welche diese Polymerisate enthält, durch Bestrahlung mit Mikrowellen azeotrop entwässert wird.

Die erfindungsgemäß einzusetzende W/O-Emulsion eines wasserlöslichen Polymeren kann auf bekannte Weise, z.B. nach der DE-PS 24 32 699, hergestellt werden. Als wasserlösliche Monomere kommen die bekannten $\alpha$, ß-mono-ethylenisch ungesättigten polymerisationsfähigen Verbindungen infrage.

Als Beispiele seien genannt:

1. Wasserlösliche Carbonsäuren mit 3 bis 6, vorzugsweise 3 bis 4 C-Atomen wie Acrylsäure, Methacrylsäure, Crotonsäure, Maleinsäure, Itaconsäure, Citraconsäure, Aconitsäure bzw. die Alkali- und Ammoniumsalze der vorstehenden Säuren, vorzugsweise von Acrylsäure, Methacrylsäure und Maleinsäure.

2. Wasserlösliche nicht-ionische Monomere wie Acrylamid, Methacrylamid oder Vinylpyrrolidon.

3. Wasserlösliche Aminoalkylester oder Aminoalkylamide der (Meth-)Acrylsäure, beispielsweise Dimethylaminoethyl(meth)acrylat, Diethylaminoethyl(meth)acrylat, Dimethylaminopropyl(meth)acrylat, Dimethylaminobutyl-(meth)acrylat, Dimethylpropyl(meth)acrylamid oder Dimethylamino-2,2-dimethylpropyl(meth)acrylamid sowie die Salze der vorstehenden Verbindungen mit anorganischen oder organischen Säuren, wie Salzsäure oder Essigsäure, oder deren Quaternierungsprodukte mit Dimethylsulfat oder Methylchlorid.

4. $\alpha$, ß-mono-olefinisch ungesättigte Sulfonsäuren wie Vinylsulfonsäure, Styrolsulfonsäure, Acrylamidomethylpropansulfonsäure.

Selbstverständlich können auch Gemische verschiedener Monomerer zur Herstellung von Copolymerisaten eingesetzt werden, wobei besonders bevorzugt Monomere oder Monomerengemische der Gruppen 1), 2) und 3) verwendet werden.

Als Ölphase kann jede Flüssigkeit verwendet werden, die mit Wasser nicht mischbar ist. Beispiele sind in der DE-PS 10 89 173 gegeben. Vorzugsweise werden Kohlenwasserstoffe oder Gemische von Kohlenwasserstoffen eingesetzt. Diese können sowohl aliphatischen wie auch aromatischen Charakter haben. Als aromatische flüssige Kohlenwasserstoffe sind z.B. Toluol und Xylol geeignet, als aliphatische flüssige Kohlenwasserstoffe Paraffinöle. Aber auch andere organische Flüssigkeiten, wie Perchlorethylen sind verwendbar. Bevorzugt werden Kohlenwasserstoffe mit Siedepunkten im Bereich von 120 bis 350°C verwendet, insbesondere gesättigte Kohlenwasserstoffe, wie n- und i-Paraffine.

Das Gewichtsverhältnis der Ölphase zur Polymer enthaltenden wässrigen Phase kann in weiten Grenzen variiert werden, vorzugsweise liegt es zwischen 3:1 und 1:3. Die Polymeremulsion enthält außerdem die dafür bekannten W/O-Emulgatoren, wie z.B. Sorbitanfettsäureester, Glycerinester, Alkyl- oder Arylpolyglycolether, Fettsäurepolyglycolester und deren Mischungen. Die Emulgatoren werden vorzugsweise in Mengen zwischen 5 und 20 Gew.-%, insbesondere zwischen 10 und 15 Gew.-%, bezogen auf die Ölphase, verwendet.

Die Polymerisation der Monomeren kann durch radikalische Polymerisation mit Hilfe der üblichen Polymerisationsinitiatoren per Peroxyden, Azoverbindungen und/oder Redoxsystemen oder photochemisch, z.B. durch UV-Stahlung ausgelöst und bei Temperaturen von etwa 0 bis 100°C durchgeführt werden.

Die Entwässerung der W/O-Emulsion erfolgt durch Erhitzen der Emulsion bis zum Siedepunkt. Dabei können organische Flüssigkeiten, die mit Wasser Azeotrope bilden, wie Benzol, Toluol und Heptan, der W/O-Emulsion zugesetzt werden. Bevorzugt dient jedoch die als Ölphase verwendete organische Flüssigkeit selbst als azeotropes Entwässerungsmittel. Das azeotrope Gemisch aus Wasser und organischer Flüssigkeit wird abdestilliert. Die nach der Kondensation abgetrennte organische Phase kann ggfs. über einen Wasserabscheider in das Reaktionsgefäß zurückgeführt werden. Dieser Prozess wird solange fortgesetzt, bis nahezu das gesamte Wasser aus dem Polymerisat entfernt worden ist. Die azeotrope Destillation erfolgt bei Temperaturen unter 100°C, vorzugsweise jedoch bei 50 bis 70°C unter vermindertem Druck. Sie kann diskontinuierlich oder kontinuierlich ausgeführt werden.

Erfindungsgemäß wird das Erhitzen durch Bestrahlung mit Mikrowellen vorgenommen, wobei die Wellenlänge zwischen 0,1 und 30 cm liegen kann. Vorzugsweise beträgt die Frequenz der Mikrowellen 2450 MHZ. Durch Wechselwirkung mit elektromagnetischer Strahlung im Bereich der Mikrowellen nehmen Moleküle Rotationsenergie auf. Bedingung dafür ist, daß das Molekül im Grundzustand ein permanentes elektrisches Dipolmoment besitzt, das sich beim Übergang in den angeregten Zustand zeitlich ändert. Das Moment des angeregten Zustandes muß also von dem des Grundzustandes verschieden sein. Diese Voraussetzungen sind für das Wassermolekül - sein Dipolmoment beträgt 1,85 Debye - erfüllt.

Durch die Mikrowellen werden bevorzugt die Wassermoleküle der W/O-Emulsion thermisch angeregt, nicht aber das Dispergieröl. Als Folge sind die Verdampferflächen, durch die bei konventioneller Arbeitsweise die Wärme übertragen würde, auf einem niedrigeren Temperaturniveau als die 'von innen' aufgeheizte W/O-Emulsion. Polymerablagerungen auf den Verdampferflächen werden dadurch verhindert, die Standzeiten des Verdampfers erhöht.

Die erfindungsgemäßen Dispersionen zeigen auch nach mehreren Wochen Lagerzeit kein Absetzen des Polymeren. Die Polymerkonzentration der Dispersionen liegt zwischen 20 und 65, vorzugsweise zwischen 40 und 60 Gew.-%. Zur Herstellung von wässrigen Lösungen der Polymerisate können die Dispersionen nach der Entwässerung mit entsprechenden Netzmitteln versetzt werden.

Die erfindungsgemäßen Dispersionen wasserlöslicher Polymeren finden auf vielen Gebieten Anwendung. Beispielhaft seien die Verwendung als Flockungsmittel bei der Behandlung kommunaler oder industrieller Abwässer, bei der Aufbereitung von Kohle und Erz, als Schlichten und Verdickungsmittel, bei der Papierherstellung als Retentionsmittel, als Bohrhilfsmittel sowie bei der tertiären Erdölförderung als Flutmittelzusatz genannt.

Die folgenden Beispiele dienen zur weiteren Erläuterung der Erfindung. Die dort angegebene Viskosität wird aus wird aus einer 1%igen Lösung des Polymeren in destilliertem Wasser mit einem Brookfield-Viskosimeter gemessen. Zur schnelleren Auflösung wird der 1%igen Lösung 10 Gew.% eines ethoxylierten Nonylphenols mit 10 Ethylenoxideinheiten, bezogen auf das Gewicht der eingetzten Emulsion bzw. Dispersion, zugegeben.

Herstellung der W/O-Emulsionen

Die wässrige Monomerlösung wird mit konzentrierter Salzsäure auf einen pH-Wert von 3,0 bzw. mit konzentrierter Natronlauge auf einen pH-Wert von 8,0 eingestellt und zu einer Lösung aus Sorbitanmonooleat, ethoxyliertem Nonylphenol mit 10 Ethylenoxideinheiten und Azobuttersäurenitril in einem aliphatischen Kohlenwasserstoffgemisch (Kp. 300 bis 330°C) gegeben. Mittels eines Intensivkühlers wird die wässrige Phase in der Ölphase emulgiert, wobei eine stabile W/O-Emulsion entsteht. Zur Beseitigung von gelöstem Sauerstoff wird die Emulsion eine Stunde mit Stickstoff gespült und eine Temperatur von 60°C eingestellt, bei der die Polymerisation bis zum Ende durchgeführt wird. Man erhält eine stabile Emulsion.

Beispiel

| | 1 | 2 | 3 | 4 | 5 | 6 |
|---|---|---|---|---|---|---|
| Acrylamid (Teile) | 199 | 192,5 | 183 | 161 | 183 | 183 |
| DMAEMA* · CH₃CL* | 82 | – | – | 161 | – | – |
| AMPS** | – | – | – | – | – | 66 |
| Acrylsäure (Teile) | – | – | 99,5 | – | 46 | – |
| Natronlauge 45%ig (Teile) | – | – | 122 | – | 57 | 28,5 |
| Wasser (Teile) | 342 | 437 | 366 | 257 | 300 | 300 |
| Sorbitanmonooleat (Teile) | 35 | 30 | 45 | 35 | 34 | 35 |
| Ethoxyliertes Nonylphenol mit 10 EO⁺Einheiten (Teile) | 8 | 10 | 10 | 8 | 11 | 9 |
| Azoisobuttersäurenitril (Teile) | 0,2 | 0,2 | 0,2 | 0,2 | 0,2 | 0,2 |
| aliphat.Kohlenwasserstoffgemisch. (Kp.300 bis 330°C) (Teile) | 297 | 287 | 370 | 287 | 336 | 324 |
| Polymeranteil (%) | 29,2 | 20,1 | 26,2 | 35,4 | 25,1 | 27,1 |
| Wasseranteil (%) | 35,5 | 45,7 | 38,3 | 28,3 | 35,5 | 34,0 |
| Viskosität der 1%igen Lösung (mPa.s) | 3600 | 1500 | 9000 | 7500 | 8000 | 4300 |

\* DMAEMA . CH₃Cl = Dimethylaminoethylmethacrylat · Methylchlorid

\*\* AMPS = Acrylamidomethylpropansulfonsäure

+ EO = Ethylenoxid

Herstellung der nicht-wässrigen Dispersionen

Beispiel 1:

Eine Siedeblase, die über einen absteigenden Kühler mit einer Vorlage verbunden ist, wird mit Mikrowellen der Frequenz 2450 MHz bestrahlt. Der Mikrowellensender hat eine Ausgangsleistung von 650 W. Bei einem auf 0,07 bar reduzierten Druck werden innerhalb von 70 Minuten 250 g eines Polymerisates entsprechend Herstellungsbeispiel 3 in die Siedeblase eindosiert. In der Vorlage werden als Destillat 95 ml Wasser und 5 ml Dispergieröl aufgefangen. In der Siedeblase verbleiben 150 g Dispersion mit einem Polymeranteil von 43,6 % und einem Wasseranteil von 1,2 %, bezogen auf Polymeres. Eine 1%ige Polymerlösung hat eine Viskosität von 9100 mPa·s. Die Siedeblase ist frei von anhaftenden Polymerabscheidungen.

Beispiel 2:

Analog Beispiel 1 werden 250 g eines Polymerisats entsprechend Herstellungsbeispiel 1 azeotrop entwässert. Als Destillat werden 87 ml Wasser und 5 ml Dispergieröl aufgegangen. In der Siedeblase verbleiben 158 g Dispersion mit einem Polymeranteil von 42,2 % und einem Wasseranteil von 2,4 %, bezogen auf Polymeres. Eine 1%ige Polymerlösung hat eine Viskosität von 3500 mPa·s. Die Siedeblase ist frei von anhaftenden Polymerabscheidungen.

Beispiel 3:

Analog Beispiel 1 werden 250 g eines Polymerisats entsprechend Herstellungsbeispiel 4 azeotrop entwässert. Als Destillat werden 69 ml Wasser und 5 ml Dispergieröl aufgefangen. In der Siedeblase verbleiben 176 g Dispersion mit einem Polymeranteil von 50,3 % und einem Wasseranteil von 1,9 %, bezogen auf Polymeres. Eine 1%ige Polymerlösung hat eine Viskosität von 7500 mPa.s. Die Siedeblase ist frei von anhaftenden Polymerabscheidungen.

Beispiel 4:

Eine Porzellanschale, die einen ebenen Boden mit einem Durchmesser von 19 cm besitzt, wird mit einem dicht schliessenden Deckel, der über einen absteigenden Kühler mit einer Vorlage verbunden ist, versehen. Die Schale wird mit 250 g eines Polymerisats entsprechend Herstellungsbeispiel 2 gefüllt, die Füllhöhe beträgt ca. 1 cm. Durch Bestrahlung mit Mikrowellen einer Frequenz von 2450 MHz und einer Leistung von 650 W wird das Polymerisat azeotrop entwässert. Bei einem auf 0,07 bar reduzierten Druck werden innerhalb 60 Minuten in der Vorlage 113 ml Wasser und 9 ml Dispergieröl aufgefangen. In der Porzellanschale verbleiben 128 g Dispersion mit einem Polymeranteil von 39,3 % und einem Wasseranteil von 2,3 %, bezogen auf Polymeres. Eine 1%ige Polymerlösung hat eine Viskosität von 1400 mPa·s. Die Porzellanschale ist frei von anhaftenden Polymerabscheidungen.

Beispiel 5:

Analog Beispiel 4 werden 250 g eines Polymerisats entsprechend Herstellungsbeispiel 5 azeotrop entwässert. Als Destillat werden 87 ml Wasser und 7 ml Dispergieröl aufgefangen. In der Porzellanschale verbleiben 156 g Dispersion mit einem Polymeranteil von 40,3 % und einem Wasseranteil von 2,6 %, bezogen auf Polymeres. Eine 1%ige Polymerlösung hat eine Viskosität von 8100 mPa·s. Die Porzellanschale ist frei von anhaftenden Polymerabscheidungen.

Beispiel 6:

In einen Schlangenrohrverdampfer, der mit einem Zyklon zur Gas/Flüssig-Trennung verbunden ist, werden innerhalb von 3 Stunden 500 g Polymerisat entsprechend Herstellungsbeispiel 1 bei einem auf 0,07 bar reduzierten Druck kontinuierlich eindosiert. Der Schlangenrohrverdampfer und der Zyklon werden dabei mit Mikrowellen der Frequenz 2450 MHz und der Leistung 650 W bestrahlt. Als Destillat werden 171 ml Wasser und 11 ml Dispergieröl aufgefangen, die entwässerte Dispersion hat und ein Gewicht von 318 g bei einem Polymeranteil von 45,9 % und einem Wasseranteil von 4,5 %, bezogen auf Polymeres. Eine 1%ige Polymerlösung hat eine Viskosität von 3400 mPa·s. Der Schlangenrohrverdampfer und der Zyklon sind frei von anhaftenden Polymerabscheidungen.

Beispiel 7:

Analog Beispiel 6 werden 500 g Polymerisat entsprechend Herstellungsbeispiel 5 kontinuierlich entwässert. Als Destillat werden 171,5 ml Wasser und 14 ml Dispergieröl aufgefangen. Die entwässerte Dispersion hat ein Gewicht von 314,5 g bei einem Polymeranteil von 40,0 % und einem Wasseranteil von 4,6 %, bezogen auf Polymeres. Eine 1%ige Polymerlösung hat eine Viskosität von 8100 mPa·s. Der Schlangenrohrverdampfer und der Zyklon sind frei von anhaftenden Polymerabscheidungen.

Beispiel 8:

Analog Beispiel 4 werden 250 g eines Polymerisates entsprechend Herstellungsbeispiel 6 azeotrop entwässert. Als Destillat werden 82 ml Wasser und 8 ml Dispergieröl aufgefangen. In der Siedeblase verbleiben 160 g Dispersion mit einem Polymeranteil von 42,3 % und einem Wasseranteil von 4,4 %, bezogen auf Polymeres. Eine 1%ige Polymerlösung hat eine Viskosität von 4200 mPa.s. Die Siedeblase ist frei von anhaftenden Polymerabscheidungen.

Patentansprüche

1. Verfahren zur Herstellung zustands- und wirkungsstabiler nicht-wässriger Dispersionen wasserlöslicher Polymerisate, die durch Polymerisation mindestens eines wasserlöslichen $\alpha,\beta$-ethylenisch ungesättigten Monomeren in einer W/O-Emulsion hergestellt und azeotrop bis auf einen Rest-Wassergehalt von 5 Gew.-%, bezogen auf Polymeres, entwässert worden sind, dadurch gekennzeichnet, daß die polymerisathaltige W/O-Emulsion durch Bestrahlung mit Mikrowellen azeotrop entwässert wird.

2. Verfahren nach Anspruch 1, dadurch gekennzeichnet, daß die W/O-Emulsion einen Gehalt an hochmolekularen wasserlöslichen Polymerisaten eines Molekulargewichts von 100 000 bis 50 000 000, bevorzugt 1 000 000 bis 10 000 000, aufweist.

3. Verfahren nach Ansprüchen 1 bis 2, dadurch gekennzeichnet, daß die W/O-Emulsion bis zu einer Polymerkonzentration zwischen 20 und 65, vorzugsweise zwischen 40 bis 60 Gew.-% aufkonzentriert wird.

4. Verfahren nach Anspruch 1, dadurch gekennzeichnet, daß die W/O-Emulsion mit Mikrowellen einer Wellenlänge zwischen 0,1 und 30 cm bestrahlt wird.

Europäisches
Patentamt

**EUROPÄISCHER RECHERCHENBERICHT**

**0087695**
Nummer der Anmeldung

EP 83 10 1557

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | FR-A-2 026 944 (ESSO) | | C 08 F 6/00<br>C 08 J 3/02 |
| | --- | | |
| D,A | FR-A-2 268 821 (BAYER) | | |
| | ----- | | |
| | | | **RECHERCHIERTE SACHGEBIETE (Int. Cl. ³)**<br><br>C 08 G<br>C 08 J |

Der vorliegende Recherchenbericht wurde für alle Patentansprüche erstellt.

| Recherchenort<br>DEN HAAG | Abschlußdatum der Recherche<br>31-05-1983 | Prüfer<br>BOLETTI C.M. |
|---|---|---|